# EUROPÄISCHE PATENTANMELDUNG

(11) **EP 4 834 650 A1**
(43) Veröffentlichungstag der Anmeldung: **04.11.2026**
(21) Anmeldenummer: 26174851.1
(22) Anmeldetag: 27.04.2026
(51) Int. Cl.: B60L 58/13, B60L 58/14, B60L 58/15, B60L 58/16, H01M 10/44

(54) **VERFAHREN UND VORRICHTUNG ZUM BETREIBEN EINES ELEKTRISCHEN ENERGIESPEICHERS**

(30) Priorität: 02.05.2025 DE 102025116936
(71) Anmelder: MAN Truck & Bus SE, 80995 München (DE)
(72) Erfinder: Pravin, Rohit, 80995 München (DE); Scheibenbogen, Paul, 80995 München (DE)

(57) **Zusammenfassung**

Die Erfindung betrifft u. a. ein Verfahren zum Betreiben eines elektrischen Energiespeichers (20) eines Kraftfahrzeugs (10). Das Verfahren weist ein Vorgeben einer Entladestromgrenze (G^{E}) auf, wobei die Entladestromgrenze (G^{E}) einen von dem elektrischen Energiespeicher (20) maximal abführbaren Strom angibt. Das Verfahren weist ferner ein Betreiben des elektrischen Energiespeichers (20) unter Berücksichtigung der vorgegebenen Entladestromgrenze (G^{E}) auf. Weiterhin ist vorgesehen, dass das Vorgeben ein zeitweises Einstellen der Entladestromgrenze (G^{E}) auf Entladestromgrenzwerte, die größer als ein, vorzugsweise unter Dauerentladebelastungen des elektrischen Energiespeichers (20) angenommener, Dauerbetrieb-Entladestromgrenzwert (G^{E}_{D}) sind, aufweist, wobei das Einstellen in mindestens zwei Stufen erfolgt.

## Beschreibung

Die Erfindung betrifft Verfahren zum Betreiben eines elektrischen Energiespeichers, eine entsprechende Vorrichtung zum Betreiben eines elektrischen Energiespeichers und ein Kraftfahrzeug.

Im Stand der Technik sind Fahrzeuge, die mittels eines Elektromotors zumindest teilweise elektrisch angetrieben werden, grundsätzlich bekannt. Die hierfür notwendige elektrische Energie wird in der Regel von einer Traktionsbatterie des Fahrzeugs bereitgestellt, die eine Vielzahl elektrisch miteinander verschalteter Batteriezellen umfasst.

Weiterhin ist bekannt, dass ein Überschreiten von, von der jeweiligen Traktionsbatterie bzw. der verwendeten Batteriezellen abhängiger Lade- bzw. Entladestromgrenzen zu irreversiblen Schäden an der Traktionsbatterie führen kann. Bislang bekannte Ansätze zur Begrenzung von Lade- bzw. Entladeströmen liefern dabei nicht in allen Betriebssituationen des Fahrzeugs eine zufriedenstellende Performance, sodass mitunter deutliche Leistungseinbußen für den Fahrer bemerkbar sind.

Die Aufgabe der Erfindung besteht darin, eine Lösung für einen verbesserten Betrieb eines elektrischen Energiespeichers für ein Kraftfahrzeug bereitzustellen, mit der die Nachteile der bisherigen Lösungen vermieden werden können. Bevorzugt ist es eine Aufgabe der Erfindung, eine Lösung bereitzustellen, mit der sowohl eine ausreichende Performance des Kraftfahrzeugs in möglichst vielen Betriebssituationen (z. B. während langer Beschleunigungsphasen oder langer Rekuperationsphasen des Kraftfahrzeugs) als auch eine ausreichende Betriebssicherheit des Energiespeichers sichergestellt werden kann.

Diese Aufgaben können mit den Merkmalen der unabhängigen Ansprüche gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Ein erster unabhängiger Aspekt der vorliegenden Offenbarung betrifft ein (z. B. erstes) Verfahren zum Betreiben eines elektrischen Energiespeichers (z. B. einer Traktionsbatterie) eines Kraftfahrzeugs (bzw. für ein Kraftfahrzeug), vorzugsweise während eines Fahrbetriebs (z. B. Vortriebs) des Kraftfahrzeugs. Bevorzugt ist das Kraftfahrzeug ein Hybrid- oder Elektrofahrzeug, besonders bevorzugt ein Nutzfahrzeug, bspw. ein Hybrid-Nutzfahrzeug oder Elektro-Nutzfahrzeug. Weiterhin bevorzugt weist der elektrische Energiespeicher mehrere (z. B. elektrisch miteinander verschaltete) Batteriezellen (z. B. Lithium-Ionen-Batteriezellen) auf.

Das Verfahren weist ein Vorgeben einer (z. B. aktuellen) Entladestromgrenze auf, wobei die (z. B. aktuelle) Entladestromgrenze einen von dem elektrischen Energiespeicher (z. B. aktuell) maximal (z. B. zu einem Verbraucher bzw. einer Last, wie z. B. einem Elektromotor, des Kraftfahrzeugs) abführbaren (z. B. Gleich-)Strom (z. B. Entladestrom) angibt. Bevorzugt ist die Entladestromgrenze standardmäßig auf einen Dauerbetrieb-Entladestromgrenzwert (z. B. 50 Ampere) eingestellt. Zudem oder alternativ kann der Dauerbetrieb-Entladestromgrenzwert bei Dauerentladebelastungen des elektrischen Energiespeichers angenommen und/oder eingestellt werden und/oder von einem Hersteller des elektrischen Energiespeichers (bzw. der Batteriezellen) vorgegeben sein.

Ferner weist das Verfahren ein Betreiben (z. B. Entladen) des elektrischen Energiespeichers unter Berücksichtigung der vorgegebenen Entladestromgrenze auf. Beispielsweise kann das Betreiben ein Entladen des elektrischen Energiespeichers mit einem (z. B. veränderlichen) Entladestrom aufweisen, wobei der Entladestrom maximal einen durch die Entladestromgrenze vorgegebenen Wert aufweisen kann.

Vorzugsweise weist das Vorgeben (z. B. um kurzzeitig Leistungsspitzen zu ermöglichen) ein zeitweises Einstellen (z. B. Anheben) der Entladestromgrenze auf Entladestromgrenzwerte, die (z. B. betragsmäßig) größer als ein (bzw. der) Dauerbetrieb-Entladestromgrenzwert sind, auf, wobei das Einstellen in mindestens zwei Stufen (z. B. Plateaus) erfolgt. Beispielsweise können eine Spitzenlast-Entladestufe (von z. B. 150 Ampere) und eine niedrigere Zwischen-Entladestufe (von z. B. 100 Ampere) vorgesehen sein, die beide oberhalb des Dauerbetrieb-Entladestromgrenzwerts liegen.

Vorteilhaft können dadurch die technischen Limitierungen des elektrischen Energiespeichers bzw. dessen Batteriezellen möglichst optimal ausgenutzt werden. Durch die kurzzeitige und dadurch für den elektrischen Energiespeicher bzw. dessen Batteriezellen in der Regel unschädliche hohe Stromentnahme kann zeitweise die Performance des Kraftfahrzeugs erhöht werden. Gleichzeitig stellt die zeitliche Begrenzung sicher, dass der Energiespeicher bzw. dessen Batteriezellen nicht übermäßig belastet werden. Das Vorsehen von mindestens zwei Stufen bietet hierbei insbesondere den Vorteil, dass durch die im Vergleich zur Spitzenlast-Entladestufe niedrigere Zwischen-Entladestufe die Performancesteigerung verlängert werden kann und dennoch die Betriebssicherheit gewahrt wird.

In einem Ausführungsbeispiel können die mindestens zwei Stufen eine (z. B. temporäre) Spitzenlast-Entladestufe aufweisen. In der Spitzenlast-Entladestufe, welche auch als Peak-Entladestufe bezeichnet werden kann, kann die Entladestromgrenze auf einen (z. B. zeitweise konstanten) Spitzenlast-Entladestromgrenzwert eingestellt sein (bzw. werden). Bevorzugt ist der Spitzenlast-Entladestromgrenzwert dabei (z. B. betragsmäßig) größer als der Dauerbetrieb-Entladestromgrenzwert, bspw. mindestens doppelt so groß. Der Dauerbetrieb-Entladestromgrenzwert kann einen absolut (z. B. technisch) maximal möglichen Entladestrom(wert) (z. B. des elektrischen Energiespeichers) angeben und/oder von einem (bzw. dem) Hersteller des elektrischen Energiespeichers (bzw. der Batteriezellen) vorgegeben sein.

Weiterhin können die mindestens zwei Stufen eine (z. B. temporäre) Zwischen-Entladestufe aufweisen. In der Zwischen-Entladestufe, welche auch als Midterm-Entladestufe bezeichnet werden kann, kann die Entladestromgrenze auf einen (z. B. zeitweise konstanten) Zwischen-Entladestromgrenzwert eingestellt sein (bzw. werden). Bevorzugt ist der Zwischen-Entladestromgrenzwert (z. B. betragsmäßig) kleiner als der Spitzenlast-Entladestromgrenzwert und (z. B. betragsmäßig) größer als der Dauerbetrieb-Entladestromgrenzwert. Beispielsweise kann der Zwischen-Entladestromgrenzwert zwischen dem Spitzenlast- und dem Dauerbetrieb-Entladestromgrenzwert liegen. Vorteilhaft kann dadurch ein mehrstufiges Deratingkonzept realisiert werden.

In einem weiteren Ausführungsbeispiel kann (z. B. bei einer durchgängigen maximalen Entladebelastung) zunächst die Spitzenlast-Entladestufe (bzw. der Spitzenlast-Entladestromgrenzwert) und anschließend die Zwischen-Entladestufe (bzw. der Zwischen-Entladestromgrenzwert) eingestellt werden.

Zudem oder alternativ kann die Entladestromgrenze von der Spitzenlast-Entladestufe (bzw. von dem Spitzenlast-Entladestromgrenzwert) auf die Zwischen-Entladestufe (bzw. auf den Zwischen-Entladestromgrenzwert) reduziert werden, wenn ein Verlauf eines Entladestroms des elektrischen Energiespeichers eine vorbestimmte Spitzenlast-Überwachungsbedingung erfüllt. Die vorbestimmte Spitzenlast-Überwachungsbedingung kann bspw. erfüllt sein, wenn ein Spitzenlast-Entladeintegral, das (z. B. kontinuierlich) einen (bzw. den) Entladestrom des elektrischen Energiespeichers über eine (bzw. die) Zeit (z. B. auf-)integriert, einen vorbestimmten (z. B. ersten) Spitzenlast-Entladeintegral-Schwellenwert annimmt (oder überschreitet). Hierbei können Entladeströme oberhalb des Dauerbetrieb-Entladestromgrenzwerts positiv und Entladeströme unterhalb des Dauerbetrieb-Entladestromgrenzwerts (und Ladeströme) negativ gewertet werden. Das Spitzenlast-Entladeintegral kann auf Werte zwischen 0 und einem oberen Maximalwert, der bspw. als zweiter Spitzenlast-Entladeintegral-Schwellenwert bezeichnet werden kann, begrenzt sein.

Zudem oder alternativ kann die Entladestromgrenze von der Spitzenlast-Entladestufe (bzw. dem Spitzenlast-Entladestromgrenzwert) zur Zwischen-Entladestufe (bzw. dem Zwischen-Entladestromgrenzwert) in einem (z. B. mittels eines Reglers) geregelten, vorzugsweise exponentiell abfallenden oder auf einem gewichteten Mittelwert zwischen dem Spitzenlast- und Zwischen-Entladestromgrenzwert basierenden, Verlauf überführt werden. Entsprechend soll der Übergang von dem Spitzenlast-Entladestromgrenzwert zum Zwischen-Entladestromgrenzwert bevorzugt nicht abrupt und/oder kontinuierlich erfolgen.

Zudem oder alternativ kann, z. B. bei einer (weiteren) durchgängigen maximalen Entladebelastung, nach der Zwischen-Entladestufe (bzw. nach dem Zwischen-Entladestromgrenzwert) der Dauerbetrieb-Entladestromgrenzwert eingestellt werden.

Zudem oder alternativ kann die Entladestromgrenze von der Zwischen-Entladestufe (bzw. dem Zwischen-Entladestromgrenzwert) auf den Dauerbetrieb-Entladestromgrenzwert reduziert werden, wenn ein Verlauf eines Entladestroms des elektrischen Energiespeichers eine vorbestimmte Zwischen-Überwachungsbedingung erfüllt. Die vorbestimmte Spitzenlast-Überwachungsbedingung kann bspw. erfüllt sein, wenn ein Zwischen- Entladeintegral, das einen (bzw. den) Entladestrom des elektrischen Energiespeichers über eine (bzw. die) Zeit (z. B. auf-)integriert, einen vorbestimmten (z. B. ersten) Zwischen-Entladeintegral-Schwellenwert) annimmt (oder überschreitet), wobei ein Integrieren des Zwischen-Entladeintegrals erst gestartet wird, wenn das Spitzenlast-Entladeintegral einen vorbestimmten (z. B. zweiten) Spitzenlast-Entladeintegral-Schwellenwert annimmt. Bevorzugt ist der zweite Spitzenlast-Entladeintegral-Schwellenwert höher als der erste Spitzenlast-Entladeintegral-Schwellenwert der vorbestimmten Spitzenlast-Überwachungsbedingung. Im Zusammenhang mit dem Zwischen-Entladeintegral können (wiederum) Entladeströme oberhalb des Dauerbetrieb-Entladestromgrenzwerts positiv und Entladeströme unterhalb des Dauerbetrieb-Entladestromgrenzwerts (und Ladeströme) negativ gewertet werden. Das Spitzenlast-Entladeintegral kann auf Werte zwischen 0 und einem oberen Maximalwert, der bspw. als zweiter Spitzenlast-Entladeintegral-Schwellenwert bezeichnet werden kann, begrenzt sein.

Zudem oder alternativ kann die Entladestromgrenze von der Zwischen-Entladestufe (bzw. von dem Zwischen-Entladestromgrenzwert) zum Dauerbetrieb-Entladestromgrenzwert in einem (z. B. mittels eines bzw. des Reglers) geregelten, vorzugsweise exponentiell abfallenden oder auf einem gewichteten Mittelwert zwischen dem Zwischen- und Dauerbetrieb-Entladestromgrenzwert basierenden, Verlauf überführt werden. Entsprechend soll der Übergang von dem Zwischen-Entladestromgrenzwert zum Dauerbetrieb-Entladestromgrenzwert bevorzugt nicht abrupt und/oder kontinuierlich erfolgen.

In einer Ausführungsform kann die Spitzenlast-Entladestufe für einen (z. B. zeitlich begrenzten) Spitzenlast-Zeitraum eingestellt werden. Beispielsweise kann der Spitzenlast-Zeitraum fest vorgegeben sein.

Bevorzugt beträgt der Spitzenlast-Zeitraum dabei maximal 40, vorzugsweise maximal 30 Sekunden, besonders bevorzugt maximal 20 Sekunden, wenn während die Spitzenlast-Entladestufe (bzw. der Spitzenlast-Entladestromgrenzwert) eingestellt ist, ein (bzw. der) Entladestrom des elektrischen Energiespeichers durchgängig den Spitzenlast-Entladestromgrenzwert annimmt. Entsprechend kann bei einer durchgängigen maximalen Entladebelastung der Spitzenlast-Zeitraum maximal 40, vorzugsweise maximal 30 Sekunden, besonders bevorzugt maximal 20 Sekunden, sein.

Zudem oder alternativ kann der Spitzenlast-Zeitraum vorzugsweise dadurch begrenzt sein, dass ein (bzw. das) Spitzenlast-Entladeintegral einen (bzw. den) vorbestimmten (z. B. ersten) Spitzenlast-Entladeintegral-Schwellenwert annimmt (oder überschreitet). Das Spitzenlast-Entladeintegral kann bspw. (z. B. kontinuierlich) einen (bzw. den) Entladestrom des elektrischen Energiespeichers über eine (bzw. die) Zeit (z. B. auf-)integrieren. Hierbei können Entladeströme oberhalb des Dauerbetrieb-Entladestromgrenzwerts positiv und Entladeströme unterhalb des Dauerbetrieb-Entladestromgrenzwerts (und Ladeströme) negativ gewertet werden. Das Spitzenlast-Entladeintegral kann auf Werte zwischen 0 und einem oberen Maximalwert, der bspw. als zweiter Spitzenlast-Entladeintegral-Schwellenwert bezeichnet werden kann, begrenzt sein.

Zudem oder alternativ kann der Spitzenlast-Zeitraum von einem zeitlichen Verlauf des Entladestroms, während der Spitzenlast-Entladestromgrenzwert eingestellt ist, abhängig sein.

In einer weiteren Ausführungsform kann die Zwischen-Entladestufe für einen (z. B. zeitlich begrenzten) Zwischen-Zeitraum eingestellt werden. Beispielsweise kann der Zwischen-Zeitraum fest vorgegeben sein.

Bevorzugt beträgt der Zwischen-Zeitraum maximal 400, vorzugsweise maximal 300 Sekunden, besonders bevorzugt maximal 200 Sekunden, wenn während die Zwischen-Entladestufe (bzw. der Zwischen-Entladestromgrenzwert) eingestellt ist, ein (bzw. der) Entladestrom des elektrischen Energiespeichers durchgängig den Zwischen-Entladestromgrenzwert annimmt. Entsprechend kann bei einer durchgängigen maximalen Entladebelastung der Zwischen-Zeitraum maximal 400, vorzugsweise maximal 300 Sekunden, besonders bevorzugt maximal 200 Sekunden, sein.

Zudem oder alternativ kann der Zwischen-Zeitraum vorzugsweise dadurch begrenzt sein, dass ein (bzw. das) Zwischen-Entladeintegral einen (bzw. den) vorbestimmten (z. B. ersten) Zwischen-Entladeintegral-Schwellenwert annimmt (oder überschreitet). Das Zwischen-Entladeintegral kann dabei einen (bzw. den) Entladestrom des elektrischen Energiespeichers über eine (bzw. die) Zeit (z. B. auf-)integrieren, wobei ein Integrieren des Zwischen-Entladeintegrals erst gestartet wird, wenn das Spitzenlast-Entladeintegral einen vorbestimmten (z. B. zweiten) Spitzenlast-Entladeintegral-Schwellenwert annimmt. Hierbei können Entladeströme oberhalb des Dauerbetrieb-Entladestromgrenzwerts positiv und Entladeströme unterhalb des Dauerbetrieb-Entladestromgrenzwerts (und Ladeströme) negativ gewertet werden. Das Zwischen-Entladeintegral kann auf Werte zwischen 0 und einem oberen Maximalwert, der bspw. als zweiter Zwischen-Entladeintegral-Schwellenwert bezeichnet werden kann, begrenzt sein.

Zudem oder alternativ kann der Zwischen-Zeitraum von einem zeitlichen Verlauf des Entladestroms, während der Zwischen-Entladestromgrenzwert eingestellt ist, abhängig sein.

In einer Ausführungsvariante können/kann der Dauerbetrieb-Entladestromgrenzwert, der Zwischen-Entladestromgrenzwert und/oder der Spitzenlast-Entladestromgrenzwert (z. B. fortwährend) in Abhängigkeit von einer Temperatur des elektrischen Energiespeichers, einem Alterungszustand (z. B. SoH-Zustand) des elektrischen Energiespeichers und/oder einem Ladezustand (z. B. SoC-Zustand) des elektrischen Energiespeichers angepasst (z. B. aktualisiert) werden. Beispielsweise kann der Dauerbetrieb-Entladestromgrenzwert, der Spitzenlast-Entladestromgrenzwert und/oder der Spitzenlast-Entladestromgrenzwert in regelmäßigen oder unregelmäßigen Abständen (z. B. an die aktuellen Eigenschaften des elektrischen Energiespeichers) angepasst werden.

In einer weiteren Ausführungsvariante kann, nachdem die Entladestromgrenze von der Spitzenlast-Entladestufe (bzw. von dem Spitzenlast-Entladestromgrenzwert) auf die Zwischen-Entladestufe (bzw. den Zwischen-Entladestromgrenzwert) oder den Dauerbetrieb-Entladestromgrenzwert reduziert wurde, zunächst eine vorbestimmte Abklingbedingung erfüllt sein müssen, bevor die Entladestromgrenze erneut auf die Spitzenlast-Entladestufe einstellbar ist bzw. eingestellt werden kann. Beispielsweise kann die vorbestimmte Abklingbedingung dann erfüllt sein, wenn ein (bzw. das) Spitzenlast-Entladeintegral, das (z. B. kontinuierlich) einen (bzw. den) Entladestrom des elektrischen Energiespeichers über eine (bzw. die) Zeit (z. B. auf-)integriert, einen (bzw. den) vorbestimmten (z. B. ersten) Spitzenlast-Entladeintegral-Schwellenwert unterschreitet. Hierbei können Entladeströme oberhalb des Dauerbetrieb-Entladestromgrenzwerts positiv und Entladeströme unterhalb des Dauerbetrieb-Entladestromgrenzwerts (und Ladeströme) negativ gewertet werden.

Zudem oder alternativ kann der Dauerbetrieb-Entladestromgrenzwert mindestens 50 Ampere, vorzugsweise mindestens 100 Ampere, besonders bevorzugt mindestens 150 Ampere, betragen.

Zudem oder alternativ kann der Zwischen-Entladestromgrenzwert mindestens 75 Ampere, vorzugsweise mindestens 150 Ampere, besonders bevorzugt mindestens 200 Ampere, betragen.

Zudem oder alternativ kann der Spitzenlast-Entladestromgrenzwert mindestens 100 Ampere, vorzugsweise mindestens 200 Ampere, besonders bevorzugt mindestens 300 Ampere betragen.

Ein weiterer Aspekt der vorliegenden Offenbarung betrifft ein (z. B. zweites) Verfahren zum Betreiben eines elektrischen Energiespeichers (z. B. einer Traktionsbatterie) eines Kraftfahrzeugs (bzw. für ein Kraftfahrzeug), vorzugsweise während eines Fahrbetriebs (z. B. Vortriebs) und/oder Rekuperationsbetriebs des Kraftfahrzeugs. Bevorzugt ist das Kraftfahrzeug ein Hybrid- oder Elektrofahrzeug, besonders bevorzugt ein Nutzfahrzeug, bspw. ein Hybrid-Nutzfahrzeug oder Elektro-Nutzfahrzeug. Weiterhin bevorzugt weist der elektrische Energiespeicher mehrere (z. B. elektrisch miteinander verschaltete) Batteriezellen (z. B. Lithium-Ionen-Batteriezellen) auf.

Das Verfahren weist ein Vorgeben einer (z. B. aktuellen) Ladestromgrenze auf, wobei die (z. B. aktuelle) Ladestromgrenze einen von dem elektrischen Energiespeicher (z. B. aktuell) maximal (z. B. von einer Stromquelle, wie z. B. einem Generator, des Kraftfahrzeugs) zuführbaren (z. B. Gleich-)Strom (z. B. Ladestrom) angibt. Bevorzugt ist die Ladestromgrenze standardmäßig auf einen Dauerbetrieb-Ladestromgrenzwert (z. B. 50 Ampere) eingestellt. Zudem oder alternativ kann der Dauerbetrieb-Ladestromgrenzwert bei einem Dauerladen des elektrischen Energiespeichers (z. B. während eines (langen) Rekuperationsbetriebs) angenommen und/oder eingestellt werden und/oder von einem Hersteller des elektrischen Energiespeichers (bzw. der Batteriezellen) vorgegeben sein.

Ferner weist das Verfahren ein Betreiben (z. B. Aufladen) des elektrischen Energiespeichers (z. B. in einer Rekuperationsphase des Kraftfahrzeugs) unter Berücksichtigung der vorgegebenen Ladestromgrenze auf. Beispielsweise kann das Betreiben ein Laden des elektrischen Energiespeichers mit einem (z. B. veränderlichen) Ladestrom (z. B. Rekuperationsstrom) aufweisen, wobei der Ladestrom maximal einen durch die Ladestromgrenze vorgegebenen Wert aufweisen kann.

Vorzugsweise weist das Vorgeben (z. B. um kurzzeitig Ladespitzen zu ermöglichen) ein zeitweises Einstellen (z. B. Anheben) der Ladestromgrenzwerte auf Ladestromgrenzwerte, die (z. B. betragsmäßig) größer als ein (bzw. der) Dauerbetrieb-Ladestromgrenzwert sind, auf, wobei das Einstellen in mindestens zwei Stufen (z. B. Plateaus) erfolgt. Beispielsweise können eine Spitzenlast-Ladestufe (von z. B. 200 Ampere) und eine niedrigere Zwischen-Ladestufe (von z. B. 150 Ampere) vorgesehen sein, die beide oberhalb des Dauerbetrieb-Ladestromgrenzwerts liegen.

Vorteilhaft können dadurch die technischen Limitierungen des elektrischen Energiespeichers bzw. dessen Batteriezellen möglichst optimal ausgenutzt werden. Durch die kurzzeitige und dadurch für den elektrischen Energiespeicher bzw. dessen Batteriezellen in der Regel unschädliche hohe Stromaufnahme kann zeitweise die Performance des Kraftfahrzeugs bzw. der Energiespeicherung erhöht werden. Gleichzeitig stellt die zeitliche Begrenzung sicher, dass der Energiespeicher bzw. dessen Batteriezellen nicht übermäßig belastet werden. Das Vorsehen von mindestens zwei Stufen bietet hierbei insbesondere den Vorteil, dass durch die im Vergleich zur Spitzenlast-Ladestufe niedrigere Zwischen-Ladestufe die Performance- bzw. Energieaufnahmesteigerung verlängert werden kann und dennoch die Betriebssicherheit gewahrt wird.

In einem Ausführungsbeispiel können die mindestens zwei Stufen eine (z. B. temporäre) Spitzenlast-Ladestufe aufweisen. In der Spitzenlast-Ladestufe, welche auch als Peak-Ladestufe bezeichnet werden kann, kann die Ladestromgrenze auf einen (z. B. zeitweise konstanten) Spitzenlast-Ladestromgrenzwert eingestellt sein (bzw. werden). Bevorzugt ist der Spitzenlast-Ladestromgrenzwert dabei (z. B. betragsmäßig) größer als der Dauerbetrieb-Ladestromgrenzwert, bspw. mindestens doppelt so groß. Der Dauerbetrieb-Ladestromgrenzwert kann einen absolut (z. B. technisch) maximal möglichen Ladestrom(wert) (z. B. des elektrischen Energiespeichers) angeben und/oder von einem (bzw. dem) Hersteller des elektrischen Energiespeichers (bzw. der Batteriezellen) vorgegeben sein.

Weiterhin können die mindestens zwei Stufen eine (z. B. temporäre) Zwischen-Ladestufe aufweisen. In der Zwischen-Ladestufe, welche auch als Midterm-Ladestufe bezeichnet werden kann, kann die Ladestromgrenze auf einen (z. B. zeitweise konstanten) Zwischen-Ladestromgrenzwert eingestellt sein (bzw. werden). Bevorzugt ist der Zwischen-Ladestromgrenzwert (z. B. betragsmäßig) kleiner als der Spitzenlast-Ladestromgrenzwert und (z. B. betragsmäßig) größer als der Dauerbetrieb-Ladestromgrenzwert. Beispielsweise kann der Zwischen-Ladestromgrenzwert zwischen dem Spitzenlast- und dem Dauerbetrieb-Ladestromgrenzwert liegen. Vorteilhaft kann dadurch ein mehrstufiges Deratingkonzept realisiert werden.

In einem weiteren Ausführungsbeispiel kann (z. B. bei einer durchgängigen maximalen Ladebelastung) zunächst die Spitzenlast-Ladestufe (bzw. der Spitzenlast-Ladestromgrenzwert) und anschließend die Zwischen-Ladestufe (bzw. der Zwischen-Ladestromgrenzwert) eingestellt werden.

Zudem oder alternativ kann die Ladestromgrenze von der Spitzenlast-Ladestufe (bzw. von dem Spitzenlast-Ladestromgrenzwert) auf die Zwischen-Ladestufe (bzw. auf den Zwischen-Ladestromgrenzwert) reduziert werden, wenn ein Verlauf eines Ladestroms des elektrischen Energiespeichers eine vorbestimmte Spitzenlast-Überwachungsbedingung erfüllt. Die vorbestimmte Spitzenlast-Überwachungsbedingung kann bspw. erfüllt sein, wenn ein Spitzenlast-Ladeintegral, das (z. B. kontinuierlich) einen (bzw. den) Ladestrom des elektrischen Energiespeichers über eine (bzw. die) Zeit (z. B. auf-)integriert, einen vorbestimmten (z. B. ersten) Spitzenlast-Ladeintegral-Schwellenwert annimmt (oder überschreitet). Hierbei können Ladeströme oberhalb des Dauerbetrieb-Ladestromgrenzwerts positiv und Ladeströme unterhalb des Dauerbetrieb-Ladestromgrenzwerts (und Entladeströme) negativ gewertet werden. Das Spitzenlast-Ladeintegral kann auf Werte zwischen 0 und einem oberen Maximalwert, der bspw. als zweiter Spitzenlast-Ladeintegral-Schwellenwert bezeichnet werden kann, begrenzt sein.

Zudem oder alternativ kann die Ladestromgrenze von der Spitzenlast-Ladestufe (bzw. dem Spitzenlast-Ladestromgrenzwert) zur Zwischen-Ladestufe (bzw. dem Zwischen-Ladestromgrenzwert) in einem (z. B. mittels eines Reglers) geregelten, vorzugsweise exponentiell abfallenden oder auf einem gewichteten Mittelwert zwischen dem Spitzenlast- und Zwischen-Ladestromgrenzwert basierenden, Verlauf überführt werden. Entsprechend soll der Übergang von dem Spitzenlast-Ladestromgrenzwert zum Zwischen-Ladestromgrenzwert bevorzugt nicht abrupt und/oder kontinuierlich erfolgen.

Zudem oder alternativ kann, z. B. bei einer (weiteren) durchgängigen maximalen Ladebelastung, nach der Zwischen-Ladestufe (bzw. nach dem Zwischen-Ladestromgrenzwert) der Dauerbetrieb-Ladestromgrenzwert eingestellt werden.

Zudem oder alternativ kann die Ladestromgrenze von der Zwischen-Ladestufe (bzw. dem Zwischen-Ladestromgrenzwert) auf den Dauerbetrieb-Ladestromgrenzwert reduziert werden, wenn ein Verlauf eines Ladestroms des elektrischen Energiespeichers eine vorbestimmte Zwischen-Überwachungsbedingung erfüllt. Die vorbestimmte Spitzenlast-Überwachungsbedingung kann bspw. erfüllt sein, wenn ein Zwischen-Ladeintegral, das einen (bzw. den) Ladestrom des elektrischen Energiespeichers über eine (bzw. die) Zeit (z. B. auf-)integriert, einen vorbestimmten (z. B. ersten) Zwischen-Ladeintegral-Schwellenwert annimmt (oder überschreitet), wobei ein Integrieren des Zwischen-Ladeintegrals erst gestartet wird, wenn das Spitzenlast-Ladeintegral einen vorbestimmten (z. B. zweiten) Spitzenlast-Ladeintegral-Schwellenwert annimmt. Bevorzugt ist der zweite Spitzenlast-Ladeintegral-Schwellenwert höher als der erste Spitzenlast-Ladeintegral-Schwellenwert der vorbestimmten Spitzenlast-Überwachungsbedingung. Im Zusammenhang mit dem Zwischen-Ladeintegral können (wiederum) Ladeströme oberhalb des Dauerbetrieb-Ladestromgrenzwerts positiv und Ladeströme unterhalb des Dauerbetrieb-Ladestromgrenzwerts (und Entladeströme) negativ gewertet werden. Das Zwischen-Ladeintegral kann auf Werte zwischen 0 und einem oberen Maximalwert, der bspw. als zweiter Zwischen-Ladeintegral-Schwellenwert bezeichnet werden kann, begrenzt sein.

Zudem oder alternativ kann die Ladestromgrenze von der Zwischen-Ladestufe (bzw. von dem Zwischen-Ladestromgrenzwert) zum Dauerbetrieb-Ladestromgrenzwert in einem (z. B. mittels eines bzw. des Reglers) geregelten, vorzugsweise exponentiell abfallenden oder auf einem gewichteten Mittelwert zwischen dem Zwischen- und Dauerbetrieb-Ladestromgrenzwert basierenden, Verlauf überführt werden. Entsprechend soll der Übergang von dem Zwischen-Ladestromgrenzwert zum Dauerbetrieb-Ladestromgrenzwert bevorzugt nicht abrupt und/oder kontinuierlich erfolgen.

In einer Ausführungsform kann die Spitzenlast-Ladestufe für einen (z. B. zeitlich begrenzten) Spitzenlast-Zeitraum eingestellt werden. Beispielsweise kann der Spitzenlast-Zeitraum fest vorgegeben sein.

Bevorzugt beträgt der Spitzenlast-Zeitraum dabei maximal 40, vorzugsweise maximal 30 Sekunden, besonders bevorzugt maximal 20 Sekunden, wenn während die Spitzenlast-Ladestufe (bzw. der Spitzenlast-Ladestromgrenzwert) eingestellt ist, ein (bzw. der) Ladestrom des elektrischen Energiespeichers durchgängig den Spitzenlast-Ladestromgrenzwert annimmt. Entsprechend kann bei einer durchgängigen maximalen Ladebelastung der Spitzenlast-Zeitraum maximal 40, vorzugsweise maximal 30 Sekunden, besonders bevorzugt maximal 20 Sekunden, sein.

Zudem oder alternativ kann der Spitzenlast-Zeitraum vorzugsweise dadurch begrenzt sein, dass ein (bzw. das) Spitzenlast-Ladeintegral einen (bzw. den) vorbestimmten (z. B. ersten) Spitzenlast-Ladeintegral-Schwellenwert annimmt (oder überschreitet). Das Spitzenlast-Ladeintegral kann bspw. (z. B. kontinuierlich) einen (bzw. den) Ladestrom des elektrischen Energiespeichers über eine (bzw. die) Zeit (z. B. auf-)integrieren. Hierbei können Ladeströme oberhalb des Dauerbetrieb-Ladestromgrenzwerts positiv und Ladeströme unterhalb des Dauerbetrieb-Ladestromgrenzwerts (und Entladeströme) negativ gewertet werden. Das Spitzenlast-Ladeintegral kann auf Werte zwischen 0 und einem oberen Maximalwert, der bspw. als zweiter Spitzenlast-Ladeintegral-Schwellenwert bezeichnet werden kann, begrenzt sein.

Zudem oder alternativ kann der Spitzenlast-Zeitraum von einem zeitlichen Verlauf des Ladestroms, während der Spitzenlast-Ladestromgrenzwert eingestellt ist, abhängig sein.

In einer weiteren Ausführungsform kann die Zwischen-Ladestufe für einen (z. B. zeitlich begrenzten) Zwischen-Zeitraum eingestellt werden. Beispielsweise kann der Zwischen-Zeitraum fest vorgegeben sein.

Bevorzugt beträgt der Zwischen-Zeitraum maximal 400, vorzugsweise maximal 300 Sekunden, besonders bevorzugt maximal 200 Sekunden, wenn während die Zwischen-Ladestufe (bzw. der Zwischen-Ladestromgrenzwert) eingestellt ist, ein (bzw. der) Ladestrom des elektrischen Energiespeichers durchgängig den Zwischen-Ladestromgrenzwert annimmt. Entsprechend kann bei einer durchgängigen maximalen Ladebelastung der Zwischen-Zeitraum maximal 400, vorzugsweise maximal 300 Sekunden, besonders bevorzugt maximal 200 Sekunden, sein.

Zudem oder alternativ kann der Zwischen-Zeitraum vorzugsweise dadurch begrenzt sein, dass ein (bzw. das) Zwischen-Ladeintegral einen (bzw. den) vorbestimmten (z. B. ersten) Zwischen-Ladeintegral-Schwellenwert annimmt (oder überschreitet). Das Zwischen-Ladeintegral kann dabei einen (bzw. den) Ladestrom des elektrischen Energiespeichers über eine (bzw. die) Zeit (z. B. auf-)integrieren, wobei ein Integrieren des Zwischen-Ladeintegrals erst gestartet wird, wenn das Spitzenlast-Ladeintegral einen vorbestimmten (z. B. zweiten) Spitzenlast-Ladeintegral-Schwellenwert annimmt. Hierbei können Ladeströme oberhalb des Dauerbetrieb-Ladestromgrenzwerts positiv und Ladeströme unterhalb des Dauerbetrieb-Ladestromgrenzwerts (und Entladeströme) negativ gewertet werden. Das Spitzenlast-Ladeintegral kann auf Werte zwischen 0 und einem oberen Maximalwert, der bspw. als zweiter Spitzenlast-Ladeintegral-Schwellenwert bezeichnet werden kann, begrenzt sein.

Zudem oder alternativ kann der Zwischen-Zeitraum von einem zeitlichen Verlauf des Ladestroms, während der Zwischen-Ladestromgrenzwert eingestellt ist, abhängig sein.

In einer Ausführungsvariante können/kann der Dauerbetrieb-Ladestromgrenzwert, der Zwischen-Ladestromgrenzwert und/oder der Spitzenlast-Ladestromgrenzwert (z. B. fortwährend) in Abhängigkeit von einer Temperatur des elektrischen Energiespeichers, einem Alterungszustand (z. B. SoH-Zustand) des elektrischen Energiespeichers und/oder einem Ladezustand (z. B. SoC-Zustand) des elektrischen Energiespeichers angepasst (z. B. aktualisiert) werden. Beispielsweise kann der Dauerbetrieb-Ladestromgrenzwert, der Spitzenlast-Ladestromgrenzwert und/oder der Spitzenlast-Ladestromgrenzwert in regelmäßigen oder unregelmäßigen Abständen (z. B. an die aktuellen Eigenschaften des elektrischen Energiespeichers) angepasst werden.

In einer weiteren Ausführungsvariante kann, nachdem die Ladestromgrenze von der Spitzenlast-Ladestufe (bzw. von dem Spitzenlast-Ladestromgrenzwert) auf die Zwischen-Ladestufe (bzw. den Zwischen-Ladestromgrenzwert) oder den Dauerbetrieb-Ladestromgrenzwert reduziert wurde, zunächst eine vorbestimmte Abklingbedingung erfüllt sein müssen, bevor die Ladestromgrenze erneut auf die Spitzenlast-Ladestufe einstellbar ist bzw. eingestellt werden kann. Beispielsweise kann die vorbestimmte Abklingbedingung dann erfüllt sein, wenn ein (bzw. das) Spitzenlast-Ladeintegral, das (z. B. kontinuierlich) einen (bzw. den) Ladestrom des elektrischen Energiespeichers über eine (bzw. die) Zeit (z. B. auf-)integriert, einen (bzw. den) vorbestimmten (z. B. ersten) Spitzenlast-Ladeintegral-Schwellenwert unterschreitet. Hierbei können Ladeströme oberhalb des Dauerbetrieb-Ladestromgrenzwerts positiv und Ladeströme unterhalb des Dauerbetrieb-Ladestromgrenzwerts (und Entladeströme) negativ gewertet werden. Das Spitzenlast-Ladeintegral kann auf Werte zwischen 0 und einem oberen Maximalwert, der bspw. als zweiter Spitzenlast-Ladeintegral-Schwellenwert bezeichnet werden kann, begrenzt sein.

Zudem oder alternativ kann der Dauerbetrieb-Ladestromgrenzwert mindestens 50 Ampere, vorzugsweise mindestens 100 Ampere, besonders bevorzugt mindestens 150 Ampere, betragen.

Zudem oder alternativ kann der Zwischen-Ladestromgrenzwert mindestens 75 Ampere, vorzugsweise mindestens 150 Ampere, besonders bevorzugt mindestens 200 Ampere, betragen.

Zudem oder alternativ kann der Spitzenlast-Ladestromgrenzwert mindestens 100 Ampere, vorzugsweise mindestens 200 Ampere, besonders bevorzugt mindestens 300 Ampere betragen.

Ein weiterer Aspekt der vorliegenden Offenbarung betrifft ein (z. B. drittes) Verfahren zum Betreiben eines elektrischen Energiespeichers eines Kraftfahrzeugs (bzw. für ein Kraftfahrzeug), vorzugsweise während eines Fahrbetriebs des Kraftfahrzeugs. Bevorzugt ist das Kraftfahrzeug ein Hybrid- oder Elektrofahrzeug, besonders bevorzugt ein Nutzfahrzeug, bspw. ein Hybrid-Nutzfahrzeug oder Elektro-Nutzfahrzeug. Weiterhin bevorzugt weist der elektrische Energiespeicher mehrere (z. B. elektrisch miteinander verschaltete) Batteriezellen (z. B. Lithium-Ionen-Batteriezellen) auf. Das Verfahren weist ein Betreiben des elektrischen Energiespeichers gemäß einem ersten Verfahren, wie hierin beschrieben, und ein Betreiben des elektrischen Energiespeichers gemäß einem zweiten Verfahren, wie hierin beschrieben, auf. Beispielsweise kann das Verfahren sowohl mindestens eine Entladephase, in der der elektrische Energiespeicher gemäß dem ersten Verfahren entladen wird, als auch mindestens eine Ladephase, in der der elektrische Energiespeicher gemäß dem zweiten Verfahren aufgeladen wird, aufweisen.

Vorzugsweise unterscheidet sich dabei der Spitzenlast-Entladestromgrenzwert und der Spitzenlast-Ladestromgrenzwert voneinander. Beispielsweise kann der Spitzenlast-Entladestromgrenzwert (z. B. betragsmäßig) größer oder kleiner als der Spitzenlast-Ladestromgrenzwert sein.

Zudem oder alternativ können sich (auch) der Zwischen-Entladestromgrenzwert und der Zwischen-Ladestromgrenzwert voneinander unterscheiden. Beispielsweise kann der Zwischen-Entladestromgrenzwert (z. B. betragsmäßig) größer oder kleiner als der Zwischen-Ladestromgrenzwert sein.

Ein weiterer Aspekt der vorliegenden Offenbarung betrifft eine Vorrichtung zum Betreiben eines elektrischen Energiespeichers (z. B. einer Traktionsbatterie) für ein Kraftfahrzeug. Bevorzugt ist das Kraftfahrzeug ein Hybrid- oder Elektrofahrzeug, besonders bevorzugt ein Nutzfahrzeug, bspw. ein Hybrid-Nutzfahrzeug oder Elektro-Nutzfahrzeug. Weiterhin bevorzugt weist der elektrische Energiespeicher mehrere (z. B. elektrisch miteinander verschaltete) Batteriezellen (z. B. Lithium-Ionen-Batteriezellen) auf. Die Vorrichtung kann z. B. Teil eines Batterie-Management-Systems sein. Die Vorrichtung ist für ein Durchführen eines Verfahrens, wie hierin beschrieben, eingerichtet. Folglich sollen die vorstehend im Zusammenhang mit dem ersten, zweiten und dritten Verfahren offenbarten Merkmale auch im Zusammenhang mit der Vorrichtung offenbart und beanspruchbar sein. Entsprechendes soll auch umgekehrt gelten. Vorteilhaft können mittels der Vorrichtung die gleichen Vorteile erzielt werden, die bereits unter Bezugnahme auf das Verfahren erläutert wurden.

Die Vorrichtung kann eine Kommunikationseinrichtung aufweisen, die für ein (z. B. drahtloses oder kabelgebundenes) Empfangen von Signalen, vorzugsweise zum Empfangen von Temperatur-, Alterungszustands- und/oder Ladungszustandssignalen, eingerichtet ist. Über die Kommunikationseinrichtung können auch Signale (z. B. Steuerbefehle) an andere Komponenten, z. B. den elektrischen Energiespeicher, ausgegeben werden. Beispielsweise können die ausgegebenen Signale den elektrischen Energiespeicher dazu veranlassen, einen vom elektrischen Energiespeicher maximal abführbaren Strom auf die Entladestromgrenze zu begrenzen und/oder einen dem elektrischen Energiespeicher maximal zuführbaren Strom auf die Ladestromgrenze zu begrenzen.

Zudem oder alternativ kann die Vorrichtung einen (z. B. Daten-)Speicher und einen (z. B. Mikro-)Prozessor aufweisen. Auf dem Speicher können Steuerbefehle zur Durchführung des Verfahrens hinterlegt sein, welche von dem Prozessor abgearbeitet werden können, was die Vorrichtung dazu veranlasst, das Verfahren durchzuführen. Die Vorrichtung kann somit je nach Ausbildung Steuerungsaufgaben und/oder Regelungsaufgaben und/oder Verarbeitungsaufgaben übernehmen.

Ein weiterer Aspekt der vorliegenden Offenbarung betrifft einen elektrischen Energiespeicher (z. B. eine Traktionsbatterie) für ein Kraftfahrzeug (z. B. für ein Elektrofahrzeug). Der elektrische Energiespeicher kann mehrere (z. B. identische) Batteriezellen (z. B. Lithium-Ionen-Batteriezellen) aufweisen. Beispielsweise können die Batteriezellen als Rundzellen, Pouchzellen und/oder prismatische Zellen ausgebildet sein. Der elektrische Energiespeicher weist eine Vorrichtung, wie hierin beschrieben, auf. Folglich sollen die vorstehend im Zusammenhang mit der Vorrichtung offenbarten Merkmale auch im Zusammenhang mit dem elektrischen Energiespeicher offenbart und beanspruchbar sein. Entsprechendes soll auch umgekehrt gelten. Die Vorrichtung kann dabei bspw. mit den mehreren Batteriezellen (z. B. elektrisch) gekoppelt und/oder verbunden sein.

Ein weiterer Aspekt der vorliegenden Offenbarung betrifft ein Kraftfahrzeug. Bevorzugt ist das Kraftfahrzeug ein Hybrid- oder Elektrofahrzeug, besonders bevorzugt ein Nutzfahrzeug, bspw. ein Hybrid-Nutzfahrzeug oder Elektro-Nutzfahrzeug. Unter einem Nutzfahrzeug kann dabei im Allgemeinen bspw. ein Fahrzeug verstanden werden, das durch seine Bauart und Einrichtung speziell zur Beförderung von Personen, zum Transport von Gütern oder zum Ziehen von Anhängerfahrzeugen ausgelegt ist. Beispielsweise kann das Nutzfahrzeug ein Lastkraftwagen, ein Sattelschlepper, ein Baustellenfahrzeug und/oder ein Omnibus sein. Das Kraftfahrzeug weist dabei eine Vorrichtung, wie hierin beschrieben, und/oder einen elektrischen Energiespeicher, z. B. wie hierin beschrieben, auf. Folglich sollen die vorstehend im Zusammenhang mit der Vorrichtung bzw. dem Energiespeicher offenbarten Merkmale auch im Zusammenhang mit dem Kraftfahrzeug offenbart und beanspruchbar sein. Entsprechendes soll auch umgekehrt gelten.

Im Allgemeinen kann das hierin beschriebene zeitliche Integrieren bspw. in diskreten Schritten erfolgen, sodass in diesem Zusammenhang auch von einem Summieren bzw. einer Entlade- bzw. Ladesumme gesprochen werden kann.

Weiterhin können sich die Angaben "größer" und "kleiner" hierin bspw. auf den jeweiligen Betrag der entsprechenden Größen, unabhängig von ihrem Vorzeichen, beziehen.

Im Allgemeinen kann unter "Stufe" bzw. "stufenförmig" ein zumindest zeitweiser waagerechter Verlauf einer entsprechenden Größe verstanden werden.

Vorzugsweise werden die Verfahren jeweils in einem (normalen) Fahrbetrieb des Kraftfahrzeugs durchgeführt. Bevorzugt werden die Verfahren somit jeweils nicht bei einem (stationären) Laden des Kraftfahrzeugs mittels einer fahrzeugexternen Ladeeinrichtung (z. B. einer Ladestation), während das Kraftfahrzeug abgestellt ist, oder bei einer Notabschaltung durchgeführt. Entsprechend können im Betrieb des Fahrzeugs auch zeitweise andere Lade- bzw. Entladestromgrenzen als die hierin beschriebenen gelten.

Die zuvor beschriebenen Ausführungsformen und Merkmale sind beliebig miteinander kombinierbar. Weitere Einzelheiten und Vorteile werden im Folgenden unter Bezug auf die beigefügten Zeichnungen beschrieben. Es zeigen:
- Figur 1: eine schematische Darstellung eines Kraftfahrzeugs gemäß einer Ausführungsform;
- Figur 2: eine schematische Darstellung eines Verfahrens gemäß einer Ausführungsform;
- Figur 3: eine schematische Darstellung eines zeitlichen Verlaufs von Entladegrößen während eines exemplarischen Betriebs eines elektrischen Batteriespeichers mit einem Verfahren gemäß einer Ausführungsform; und
- Figur 4: eine schematische Darstellung eines zeitlichen Verlaufs von Entladegrößen während eines weiteren exemplarischen Betriebs eines elektrischen Batteriespeichers mit einem Verfahren gemäß einer Ausführungsform.

Die in den Figuren dargestellten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

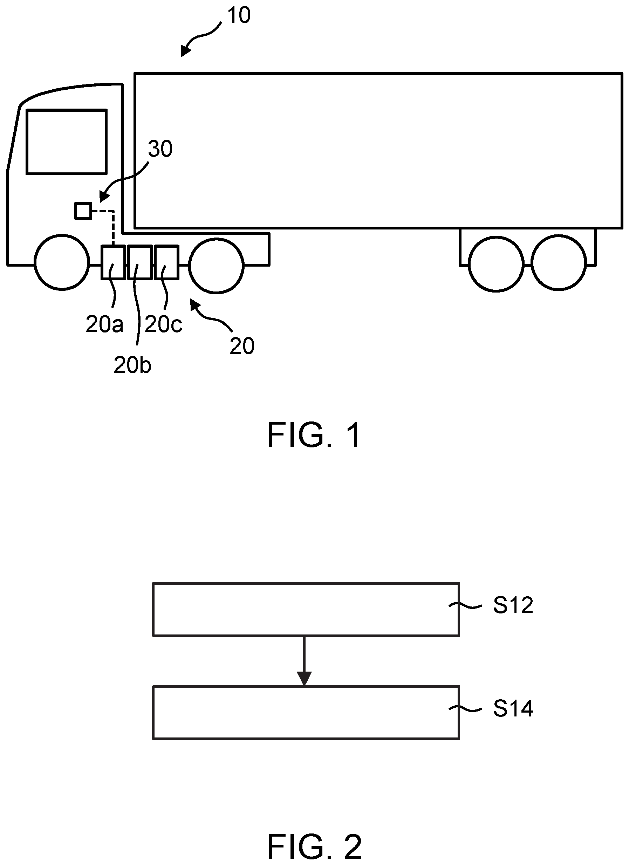

Figur 1 zeigt ein Kraftfahrzeug 10. Das Kraftfahrzeug 10 kann beispielsweise wie dargestellt, ein Sattelschlepper sein. Bei dem Kraftfahrzeug 10 kann es sich allerdings auch um einen Lastkraftwagen, einen Omnibus, eine Baumaschine oder einen Personenkraftwagen handeln.

Bevorzugt handelt es sich bei dem Kraftfahrzeug 10 um ein Elektrofahrzeug, besonders bevorzugt um ein Elektro-Nutzfahrzeug. Entsprechend kann das Kraftfahrzeug 10 mindestens eine elektrische Antriebseinheit (nicht dargestellt) zum Vortrieb des Kraftfahrzeugs 10, z. B. einen zentralen Elektroantrieb, mehrere Elektroradnabenantriebe oder mehrere radnahe Elektroantriebe, aufweisen.

Wie in Figur 1 dargestellt, weist das Kraftfahrzeug 10 einen elektrischen Energiespeicher 20 und eine Vorrichtung 30 zum Betreiben des elektrischen Energiespeichers 20 auf.

Der elektrische Energiespeicher 20 dient bevorzugt zum Speichern elektrischer Energie und/oder zum Bereitstellen elektrischer Energie für die mindestens eine elektrische Antriebseinheit. Der elektrische Energiespeicher 20 kann über Schaltschütze mit einem Bordnetz des Kraftfahrzeugs 10 verbindbar sein.

Bevorzugt ist der elektrische Energiespeicher 20 als Hochvolt-Energiespeicher ausgeführt. Der Hochvolt-Energiespeicher kann z. B. mit einer Gleichspannung zwischen 60 V und 1,5 kV, besonders bevorzugt zwischen 400 V und 850 V, betrieben werden. Besonders bevorzugt handelt es sich bei dem Hochvolt-Energiespeicher um einen 850V-Energiespeicher.

Wie in Figur 1 dargestellt, kann der elektrische Energiespeicher 20 mehrere Batteriepacks, vorliegend die Batteriepacks 20a, 20b, 20c, aufweisen. Die Batteriepacks 20a, 20b, 20c können bspw. jeweils identisch ausgebildet sein und, z. B. entlang der Fahrzeuglängsrichtung, verteilt angeordnet sein. Die Batteriepacks 20a, 20b, 20c können jeweils eine Nennkapazität von mindestens 60 kWh, vorzugsweise mindestens 70 kWh, besonders bevorzugt mindestens 90 kWh, aufweisen.

Die Vorrichtung 30 kann, wie beispielhaft in Figur 1 dargestellt, als eine zentrale Vorrichtung ausgebildet sein, die bspw. allen Batteriepacks 20a, 20b, 20c des Batteriesystems 20 zugeordnet ist. Grundsätzlich kann die Vorrichtung 30 allerdings auch dezentral ausgebildet sein, bspw. in Form mehrerer Module bzw. Einheiten, die bspw. jeweils einem Batteriepack 20a, 20b, 20c zugeordnet sind und miteinander, z. B. über Signalleitungen und/oder einen Datenbus, kommunizieren.

Die Vorrichtung 30 dient zum Betreiben eines elektrischen Energiespeichers 20. Entsprechend können die Vorrichtung 30 und der elektrische Energiespeicher 20 über mindestens eine Signalleitung (gestrichelt dargestellt) miteinander verbunden sein.

Die Vorrichtung 30 kann über eine Kommunikationseinrichtung (nicht dargestellt) verfügen, die für ein (z. B. drahtloses oder kabelgebundenes) Empfangen von Signalen und/oder Informationen (z. B. Ladezuständen, Temperaturen, Kapazitäten, Alterungszuständen) von dem elektrischen Energiespeicher 20 eingerichtet ist. Über die Kommunikationseinrichtung können auch Signale (z. B. Steuerbefehle) zum Betreiben des elektrischen Energiespeichers 20 an den elektrischen Energiespeicher 20 bzw. die Batteriepacks 20a, 20b, 20c ausgegeben werden.

Weiterhin kann die Vorrichtung 30 über eine entsprechende Elektronik (z. B. ausgeführt als eine Treiberschaltung oder mit Mikroprozessor(en) und Datenspeicher) verfügen. Die Vorrichtung 30 kann dabei als Teil eines Batteriemanagementsystems des Kraftfahrzeugs 10 ausgeführt sein. Vorzugsweise ist die Vorrichtung 30 für ein Durchführen eines Verfahrens, wie hierin offenbart, konfiguriert.

Figur 2 zeigt schematisch ein Verfahren zum Betreiben des elektrischen Energiespeichers 20. Das Verfahren kann beispielsweise im Betrieb der Vorrichtung 30 angewendet und/oder durchgeführt werden.

In einem Schritt S12 erfolgt ein Vorgeben einer Entladestromgrenze, die einen von dem elektrischen Energiespeicher 20 maximal abführbaren Entladestrom angibt. Beispielsweise kann die Entladestromgrenze default- bzw. standardmäßig auf einen Dauerbetrieb-Entladestromgrenzwert eingestellt sein bzw. werden. Zudem oder alternativ kann die Dauerbetrieb-Entladestromgrenzwert bspw. bei langanhaltenden Entladebelastungen des elektrischen Energiespeichers 20 angenommen bzw. eingestellt werden. Der Dauerbetrieb-Entladestromgrenzwert kann bspw. von einem Hersteller des elektrischen Energiespeichers 20 vorgegeben sein.

In einem Schritt S14 erfolgt ein Betreiben des elektrischen Energiespeichers 20 unter Berücksichtigung der vorgegebenen Entladestromgrenze. Beispielsweise kann der elektrische Energiespeicher 20 während des Betreibens mit einem veränderlichen Entladestrom entladen werden, wobei der Entladestrom maximal den durch die Entladestromgrenze bestimmten Wert aufweisen kann.

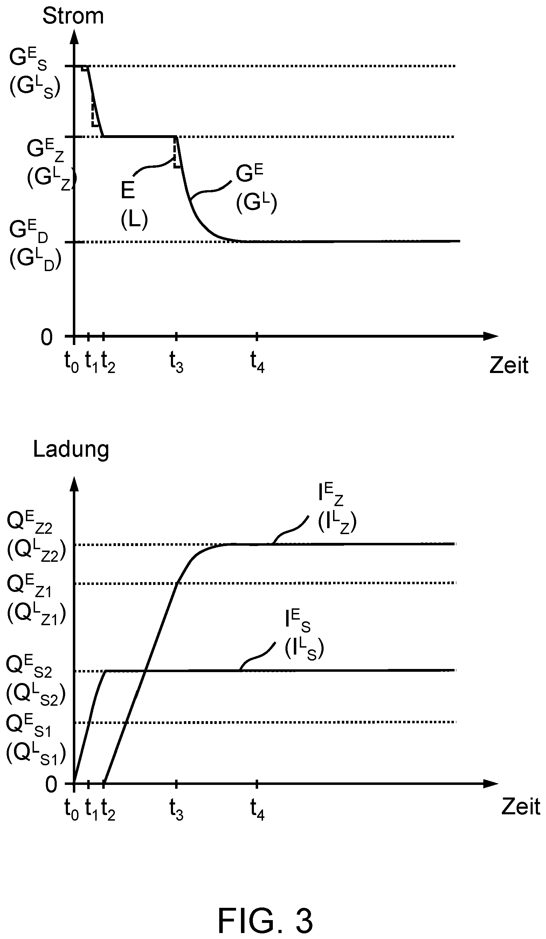

Das Verfahren zeichnet sich dabei dadurch aus, dass beim Vorgeben der Entladestromgrenze ein zeitweises Einstellen der Entladestromgrenze auf Entladestromgrenzwerte, die größer als der Dauerbetrieb-Entladestromgrenzwert sind, aufweist, wobei das Einstellen in mindestens zwei Stufen erfolgt, welche im Zusammenhang mit Figur 3 noch eingehender beschrieben werden.

Hierbei versteht es sich, dass das vorstehend beschriebene Verfahren ebenso für eine Ladestromgrenze, die einen dem elektrischen Energiespeicher 20 maximal zuführbaren Ladestrom angibt, durchgeführt werden kann bzw. das Betreiben auch ein Laden des elektrischen Energiespeichers unter Berücksichtigung der Ladestromgrenze aufweisen kann.

Figur 3 zeigt eine schematische Darstellung eines zeitlichen Verlaufs von Entladegrößen während eines exemplarischen Betriebs eines elektrischen Energiespeichers 20 gemäß einer Ausführungsform des hierin beschriebenen Verfahrens. Der Betrieb kann bspw. ein Losfahren bzw. Beschleunigen eines zunächst stehenden, Kraftfahrzeugs 10 mit vollgeladenem elektrischen Energiespeicher 20 sein. Dabei wird im elektrischen Energiespeicher 20 gespeicherte Energie bspw. der mindestens einen elektrische Antriebseinheit zugeführt und der elektrische Energiespeicher 20 somit entladen.

Im oberen Teil sind hierbei eine vorgegebene Entladestromgrenze G^{E}, die einen von dem elektrischen Energiespeicher 20 (theoretisch) maximal abführbaren Entladestrom E angibt, und ein tatsächlich von dem elektrischen Energiespeicher 20 abgeführter Entladestrom E als Funktion der Zeit dargestellt. Entsprechend der Vorgabe weist der Entladestrom E Werte gleich oder unter der Entladestromgrenze G^{E} auf. Der elektrische Energiespeicher 20 kann somit maximal mit einem Entladestrom E gleich der Entladestromgrenze G^{E} entladen werden, wobei die Entladestromgrenze G^{E} nicht genutzt werden muss und somit auch ein Entladestrom E unterhalb der Entladestromgrenze G^{E} auftreten kann.

Im unteren Teil sind die zeitlichen Verläufe eines Spitzenlast-Entladeintegrals I^{E}_{S} und eines Zwischen-Entladeintegrals I^{E}_{Z} dargestellt, welche im Folgenden noch eingehender beschrieben werden.

In der gezeigten exemplarischen Ausführungsform in Figur 3 ist die Entladestromgrenze G^{E} standardmäßig auf einen Dauerbetrieb-Entladestromgrenzwert G^{E}_{D} eingestellt, wobei der Dauerbetrieb-Entladestromgrenzwert G^{E}_{D} temporär überschritten werden kann. Dies ist beispielsweise zum Zeitpunkt t₀ der Fall, bei dem die Entladestromgrenze G^{E}_{D} auf einen Spitzenlast-Entladestromgrenzwert G^{E}_{S}, der größer als der Dauerbetrieb-Entladestromgrenzwert G^{E}_{D} ist, bzw. eine Spitzenlast-Entladestufe eingestellt wird, bspw. um für ein (starkes) Beschleunigen des (zunächst noch stehenden) Kraftfahrzeugs 10 der mindestens einen elektrischen Antriebseinheit ausreichend Strom zur Verfügung zu stellen.

Der Spitzenlast-Entladestromgrenzwert G^{E}_{S} kann bspw. von einem Hersteller des elektrischen Energiespeichers 20 bzw. der Batteriezellen für kurzzeitige Belastungen freigegeben sein. Der Spitzenlast-Entladestromgrenzwert G^{E}_{S} kann einen im Normalbetrieb absolut maximal möglichen Entladestrom E des elektrischen Energiespeichers 20 angeben. Entsprechend können vorzugsweise im Normalbetrieb des elektrischen Energiespeichers 20 zu keiner Zeit Entladestromwerte über dem Spitzenlast-Entladestromgrenzwert G^{E}_{S} auftreten. Wie aus Figur 3 ersichtlich, nimmt der (tatsächliche) Entladestrom E ab dem Zeitpunkt t₀ zunächst den Spitzenlast-Entladestromgrenzwert G^{E}_{S} an und fällt anschließend leicht ab, z. B. aufgrund einer (leicht) nachlassenden Leistungsanforderung, wobei der Abfall stufenförmig erfolgt.

Ab dem Zeitpunkt, ab dem der (tatsächliche) Entladestrom E den Dauerbetrieb-Entladestromgrenzwert überschreitet G^{E}_{D}, vorliegend zum Zeitpunkt t₀, kann auch das Spitzenlast-Entladeintegral I^{E}_{S} steigen. Das Spitzenlast-Entladeintegral I^{E}_{S} kann bspw. (z. B. kontinuierlich) den Entladestrom E über die Zeit integrieren, wobei Entladeströme E oberhalb des Dauerbetrieb-Entladestromgrenzwerts G^{E}_{D} positiv und Entladeströme E unterhalb des Dauerbetrieb-Entladestromgrenzwerts G^{E}_{D} (und Ladeströme) negativ gewertet werden und das Spitzenlast-Entladeintegral I^{E}_{S} minimal den Wert 0 annehmen kann. Da ab dem Zeitpunkt t₀ der Entladestrom E über dem Dauerbetrieb-Entladestromgrenzwert G^{E}_{D} liegt, wächst vorliegend das Spitzenlast-Entladeintegral I^{E}_{S} ab diesem Zeitpunkt (t₀) kontinuierlich an und erreicht zum Zeitpunkt t₁ den vorbestimmten ersten Spitzenlast-Entladeintegral-Schwellenwert Q^{E}_{S1}.

Das Erreichen des ersten Spitzenlast-Entladeintegrals-Schwellenwerts Q^{E}_{S1} kann einen Spitzenlast-Zeitraum, in dem der Spitzenlast-Entladestromgrenzwert G^{E}_{S} eingestellt sein kann, begrenzen und ein Reduzieren der Entladestromgrenze G^{E} vom Spitzenlast-Entladestromgrenzwert G^{E}_{S} auf eine Zwischen-Entladestufe triggern, in der die Entladestromgrenze G^{E} auf einen Zwischen-Entladestromgrenzwert G^{E}_{Z} eingestellt ist, der kleiner als der Spitzenlast-Entladestromgrenzwert und größer als der Dauerbetrieb-Entladestromgrenzwert G^{E}_{D} ist.

Der Spitzenlast-Zeitraum kann somit von der tatsächlichen Höhe des Entladestroms E während der Spitzenlast-Entladestromgrenzwert G^{E}_{S} eingestellt ist mitbestimmt werden. Bevorzugt ist der Spitzenlast-Zeitraum auf 30 Sekunden begrenzt, wenn während der Spitzenlast-Entladestromgrenzwert G^{E}_{S} eingestellt ist, der Entladestrom E durchgängig den Spitzenlast-Entladestromgrenzwert G^{E}_{S} annimmt. Im Fall, dass der Entladestrom E, während der Spitzenlast-Entladestromgrenzwert G^{E}_{S} eingestellt ist, auch Werte unter dem Spitzenlast-Entladestromgrenzwert G^{E}_{S} annimmt, kann der Spitzenlast-Zeitraum mitunter auch länger als 30 Sekunden sein, wobei durch das Reduzieren der Entladestromgrenze G^{E} bei Erreichen des ersten Spitzenlast-Entladeintegrals-Schwellenwert Q^{E}_{S1} in jedem Fall eine zeitliche Begrenzung des Spitzenlast-Zeitraum vorgesehen ist. Der Spitzenlast-Zeitraum kann sich somit in Abhängigkeit des zeitlichen Verlaufs des Entladestroms E bemessen, während die Spitzenlast-Entladestufe bzw. der Spitzenlast-Entladestromgrenzwert G^{E}_{S} eingestellt ist.

Im Anschluss an die Spitzenlast-Entladestufe erfolgt im Zeitraum zwischen t₁ und t₂ ein Reduzieren der Entladestromgrenze G^{E} vom Spitzenlast-Entladestromgrenzwert G^{E}_{S} auf den Zwischen-Entladestromgrenzwert G^{E}_{Z}. Dies kann bspw. mittels eines vorbestimmten geregelten, z. B. exponentiell abnehmenden, Verlaufs erfolgen. Alternativ kann die Entladestromgrenze G^{E} hier auch als ein gewichteter Mittelwert zwischen dem Spitzenlast-Entladestromgrenzwert G^{E}_{S} und dem Zwischen-Entladestromgrenzwert G^{E}_{Z} eingestellt werden, wobei die Gewichtung über den Betrag des Spitzenlast-Entladeintegral I^{E}_{S} relativ zum ersten Spitzenlast-Entladeintegral-Schwellenwert Q^{E}_{S1} oder einem im Folgenden beschriebenen zweiten Spitzenlast-Entladeintegral-Schwellenwert Q^{E}_{S2} erfolgen kann.

Da im Zeitraum zwischen t₁ und t₂ der (tatsächliche) Entladestrom E weiterhin über dem Dauerbetrieb-Entladestromgrenzwert G^{E}_{D} liegt, kann das Spitzenlast-Entladeintegral I^{E}_{S} weiter ansteigen und im Zeitpunkt t₂ einen zweiten Spitzenlast-Entladeintegral-Schwellenwert Q^{E}_{S2} erreichen. Der zweite Spitzenlast-Entladeintegral-Schwellenwert Q^{E}_{S2} kann ein maximal möglicher Wert des Spitzenlast-Entladeintegral I^{E}_{S} sein. Entsprechend kann, obwohl der Entladestrom E über dem Dauerbetrieb-Entladestromgrenzwert G^{E}_{D} liegt, das Spitzenlast-Entladeintegral I^{E}_{S} nicht weiter ansteigen.

Zum Zeitpunkt t₂ bzw. mit Erreichen von Q^{E}_{S2} kann die Entladestromgrenze G^{E} auf eine Zwischen-Entladestufe eingestellt sein, in der die Entladestromgrenze G^{E} auf einen Zwischen-Entladestromgrenzwert G^{E}_{Z} eingestellt ist, der kleiner als der Spitzenlast-Entladestromgrenzwert G^{E}_{S} und größer als der Dauerbetrieb-Entladestromgrenzwert G^{E}_{D} ist. Weiterhin kann zum Zeitpunkt t₂ bzw. mit Erreichen von Q^{E}_{S2} ein zeitliches Integrieren des Entladestroms E in einem Zwischen-Entladeintegral I^{E}_{Z} gestartet werden. Das Integrieren des Zwischen-Entladeintegral I^{E}_{Z} erfolgt somit vorzugsweise abhängig von dem (aktuellen) Wert des Spitzenlast-Entladeintegral I^{E}_{S}.

Das Zwischen-Entladeintegral I^{E}_{Z} kann - analog zum Spitzenlast-Entladeintegral I^{E}_{S} - den Entladestrom E über die Zeit integrieren, wobei Entladeströme E oberhalb des Dauerbetrieb-Entladestromgrenzwerts G^{E}_{D} positiv und Entladeströme E unterhalb des Dauerbetrieb-Entladestromgrenzwerts G^{E}_{D} (und Ladeströme) negativ gewertet werden. Auch das Zwischen-Entladeintegral I^{E}_{Z} kann, wie das Spitzenlast-Entladeintegral I^{E}_{S}, minimal den Wert Null annehmen, sodass auch dann, wenn der Entladestrom E unterhalb des Dauerbetrieb-Entladestromgrenzwerts G^{E}_{D} liegt, kein weiteres Absinken des Zwischen-Entladeintegral I^{E}_{Z} erfolgen kann.

Da der (tatsächliche) Entladestrom E in dem exemplarischen Fall ab dem Zeitpunkt t₂ den Zwischen-Entladestromgrenzwert G^{E}_{Z} annimmt bzw. auf den Zwischen-Entladestromgrenzwert G^{E}_{Z} begrenzt ist, kommt es ab dem Zeitpunkt t₂ zu einem Anwachsen des Zwischen-Entladeintegral I^{E}_{Z}, während das Spitzenlast-Entladeintegral I^{E}_{S} auf dem maximalen Wert Q^{E}_{S2} stagniert.

Analog zum Spitzenlast-Entladeintegral I^{E}_{S} kann über das Zwischen-Entladeintegral I^{E}_{Z} eine zeitliche Begrenzung der Zwischen-Entladestufe bzw. des Zwischen-Entladestromgrenzwerts G^{E}_{Z} gegeben sein. So kann, wenn das Zwischen-Entladeintegral I^{E}_{Z} einen vorbestimmten ersten Zwischen-Entladeintegral-Schwellenwert Q^{E}_{Z1} erreicht (hier zum Zeitpunkt t₃), ein Zwischen-Zeitraum, in dem der Zwischen-Entladestromgrenzwert G^{E}_{Z} eingestellt ist, beendet werden und ein Reduzieren des Zwischen-Entladestromgrenzwerts G^{E}_{Z} zurück auf den Dauerbetrieb-Entladestromgrenzwert G^{E}_{D} getriggert werden. Der erste Zwischen-Entladeintegral-Schwellenwert Q^{E}_{Z1} kann hierbei größer als der erste Spitzenlast-Entladeintegral-Schwellenwert Q^{E}_{S1} und/oder größer als der zweiter Spitzenlast-Entladeintegral-Schwellenwert Q^{E}_{S2} sein.

Der Zwischen-Zeitraum (hier der Zeitraum zwischen t₂ und t₃) kann somit von der tatsächlichen Höhe des Entladestroms E, während der Zwischen-Entladestromgrenzwert G^{E}_{Z} eingestellt ist, mitbestimmt werden. Bevorzugt ist der Zwischen-Zeitraum auf 300 Sekunden begrenzt, wenn während der Zwischen-Entladestromgrenzwert G^{E}_{Z} eingestellt ist, der Entladestrom E durchgängig den Zwischen-Entladestromgrenzwert G^{E}_{Z} annimmt. Im Fall, dass der Entladestrom E während der Zwischen-Entladestromgrenzwert G^{E}_{Z} eingestellt ist, auch Werte unter dem Zwischen-Entladestromgrenzwert G^{E}_{Z} annimmt, kann der Zwischen-Zeitraum mitunter auch länger als 300 Sekunden sein, wobei durch das Reduzieren der Entladestromgrenze G^{E}_{Z} bei Erreichen des ersten Zwischen-Entladeintegral-Schwellenwert Q^{E}_{Z1} in jedem Fall eine zeitliche Begrenzung des Zwischen-Zeitraums vorgesehen ist. Der Zwischen-Zeitraum kann sich somit in Abhängigkeit des zeitlichen Verlaufs des Entladestroms E bemessen, während die Zwischen-Entladestufe bzw. der Zwischen-Entladestromgrenzwert G^{E}_{Z} eingestellt ist.

Im Anschluss an die Zwischen-Entladestufe erfolgt im Zeitraum zwischen t₃ und t₄ ein Reduzieren der Entladestromgrenze G^{E} vom Zwischen-Entladestromgrenzwert G^{E}_{Z} auf den Dauerbetrieb-Entladestromgrenzwert G^{E}_{D}. Dies kann bspw. mittels eines vorbestimmten geregelten, z. B. exponentiell abnehmenden, Verlaufs erfolgen. Alternativ kann die Entladestromgrenze G^{E} auch als ein gewichteter Mittelwert zwischen dem Zwischen-Entladestromgrenzwert G^{E}_{Z} und dem Dauerbetrieb-Entladestromgrenzwert G^{E}_{D} eingestellt werden, wobei die Gewichtung über den Betrag des Zwischen-Entladeintegral I^{E}_{Z} relativ zum ersten Zwischen-Entladeintegral-Schwellenwert Q^{E}_{Z1} oder einem zweiten Zwischen-Entladeintegral-Schwellenwert Q^{E}_{Z2} erfolgen kann. Der zweite Zwischen-Entladeintegral-Schwellenwert Q^{E}_{Z2} kann ein maximal möglicher Wert des Zwischen-Entladeintegral I^{E}_{Z} sein. Entsprechend kann, obwohl der Entladestrom E bspw. über dem Dauerbetrieb-Entladestromgrenzwert G^{E}_{D} liegt, das Zwischen-Entladeintegral I^{E}_{Z} nicht über Q^{E}_{Z2} ansteigen.

Da im Zeitraum zwischen t₃ und t₄ der (tatsächliche) Entladestrom E weiterhin über dem Dauerbetrieb-Entladestromgrenzwert G^{E}_{D} liegt, kann das Zwischen-Entladeintegral I^{E}_{Z} weiter ansteigen und im Zeitpunkt t₄ den zweiten Zwischen-Entladeintegral-Schwellenwert Q^{E}_{Z2} erreichen. Der zweite Zwischen-Entladeintegral-Schwellenwert Q^{E}_{Z2} kann größer als der erste Zwischen-Entladeintegral-Schwellenwert Q^{E}_{Z1} sein und/oder größer als Q^{E}_{S1} und/oder Q^{E}_{S2} sein.

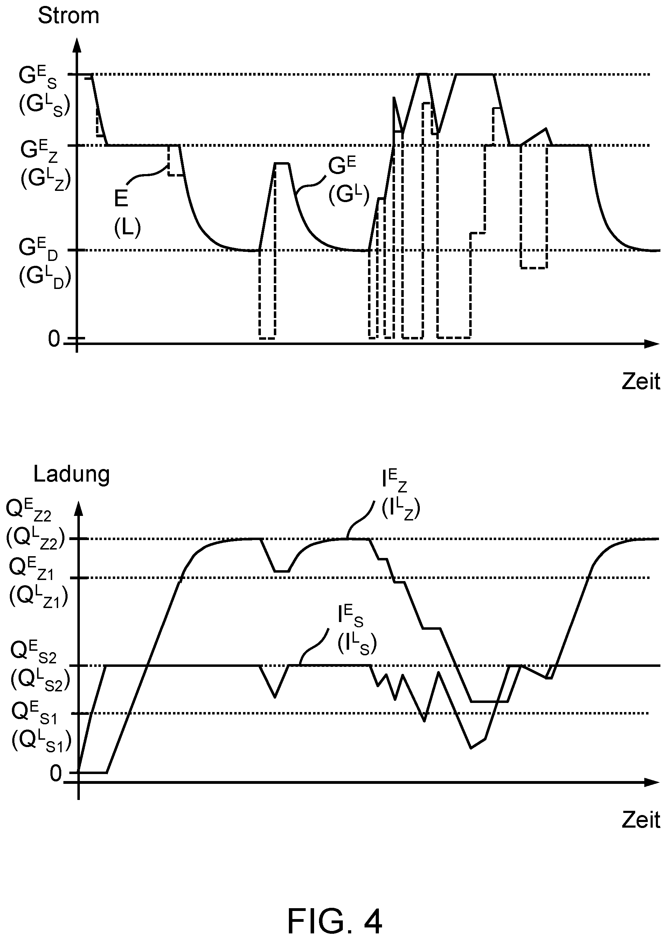

Zum Zeitpunkt t₄ bzw. mit Erreichen von Q^{E}_{S2} kann die Entladestromgrenze G^{E} wieder auf den Dauerbetrieb-Entladestromgrenzwert G^{E}_{D} eingestellt sein. Dieser kann eingestellt bleiben, bis eine vorbestimmte Abklingbedingung erfüllt ist und die Entladestromgrenze G^{E}_{D} wieder über den Dauerbetrieb-Entladestromgrenzwert G^{E}_{D} eingestellt werden kann. Beispielsweise kann die vorbestimmte Abklingbedingung wiederum an das Zwischen-Entladeintegral I^{E}_{Z} und/oder das Spitzenlast-Entladeintegral I^{E}_{S} geknüpft sein. Beispielsweise kann erst, wenn das Spitzenlast-Entladeintegral I^{E}_{S} unterhalb von Q^{E}_{S1} abgesunken ist, die Entladestromgrenze G^{E} erneut die Spitzenlast-Entladestufe bzw. den Spitzenlast-Entladestromgrenzwert G^{E}_{S} einstellbar sein bzw. eingestellt werden. Zudem oder alternativ kann die Entladestromgrenze G^{E} erst dann auf Werte oberhalb des Dauerbetrieb-Entladestromgrenzwerts G^{E}_{D} einstellbar sein bzw. eingestellt werden, wenn das Zwischen-Entladeintegral I^{E}_{Z} unterhalb von Q^{E}_{Z2} abgesunken ist. Bevorzugt erfolgt hierbei (z. B. immer) ein gleichzeitiges Absinken bzw. Entleeren des Zwischen- und Spitzenlast-Entladeintegral I^{E}_{Z} und I^{E}_{S}, sobald der (tatsächliche) Entladestrom E unter den Dauerbetrieb-Entladestromgrenzwert G^{E}_{D} sinkt (vgl. bspw. Figur 4).

Insgesamt kann dadurch ein zweistufiges Deratingkonzept bereitgestellt werden, bei dem kurzzeitige Überlastungen des elektrischen Energiespeichers 20 toleriert werden, wobei der maximal verfügbare Entladestrom E stufenweise auf einen Dauerbetrieb-Entladestromgrenzwert G^{E}_{D} zurückgeführt wird.

Figur 4 zeigt dieselben Entladegrößen wie Figur 3 während eines weiteren exemplarischen Betriebs eines elektrischen Energiespeichers 20 gemäß einer Ausführungsform des hierin beschriebenen Verfahrens. Der Beginn des in Figur 4 dargestellte Betrieb entspricht dabei den im Zusammenhang mit Figur 3 beschriebenen Verlauf. Zusätzlich dazu zeigt Figur 4 ein Einstellen der Entladestromgrenze G^{E} bei schnellen Wechseln des Entladestroms E, was in der Praxis jedoch eine eher ungeordnete Relevanz besitzt.

Neben den im Zusammenhang mit Figur 3 diskutierten Stufen kann die Entladestromgrenze G^{E} weitere Werte bzw. Stufen annehmen, wobei das Einstellen dabei wie folgt geregelt ist, wenn der Entladestrom E unter die Dauerbetrieb-Entladestromgrenzwert G^{E}_{D} zurückfällt:
Wenn das Zwischen-Entladeintegral I^{E}_{Z} den zweiten Zwischen-Entladeintegral-Schwellenwert Q^{E}_{Z2} annimmt, soll die Entladestromgrenze G^{E}, bspw. unabhängig vom Wert des Spitzenlast-Entladeintegrals I^{E}_{S}, auf den Dauerbetrieb-Entladestromgrenzwert G^{E}_{D} eingestellt werden.

Wenn das Zwischen-Entladeintegral I^{E}_{Z} kleiner als der zweite Zwischen-Entladeintegral-Schwellenwert Q^{E}_{Z2} und größer als (oder gleich wie) der erste Zwischen-Entladeintegral-Schwellenwert Q^{E}_{Z1} ist, soll die Entladestromgrenze G^{E}, bspw. unabhängig vom Wert des Spitzenlast-Entladeintegrals I^{E}_{S}, als ein gewichteter Mittelwert zwischen dem Zwischen-Entladestromgrenzwert G^{E}_{Z} und dem Dauerbetrieb-Entladestromgrenzwert G^{E}_{D} eingestellt werden, wobei die Gewichtung über den Betrag des Zwischen-Entladeintegral I^{E}_{Z} relativ zu Q^{E}_{Z2} und/oder Q^{E}_{Z1} erfolgt.

Wenn das Zwischen-Entladeintegral I^{E}_{Z} kleiner als der erste Zwischen-Entladeintegral-Schwellenwert Q^{E}_{Z1} ist und gleichzeitig das Spitzenlast-Entladeintegral I^{E}_{S} kleiner als der zweite Spitzenlast-Entladeintegral-Schwellenwert Q^{E}_{S2} und größer als (oder gleich wie) der erste Spitzenlast-Entladeintegral-Schwellenwert Q^{E}_{S1} ist, soll die Entladestromgrenze G^{E} als ein gewichteter Mittelwert zwischen dem Zwischen-Entladestromgrenzwert G^{E}_{Z} und dem Spitzenlast-Entladestromgrenzwert G^{E}_{S} eingestellt werden, wobei die Gewichtung über den Betrag des Spitzenlast-Entladeintegral I^{E}_{S} relativ zu Q^{E}_{S2} und/oder Q^{E}_{S1} erfolgt.

Wenn das Spitzenlast-Entladeintegral I^{E}_{S} kleiner als der erste Spitzenlast-Entladeintegral-Schwellenwert Q^{E}_{S1} ist und gleichzeitig das Zwischen-Entladeintegral I^{E}_{Z} kleiner als der zweite Zwischen-Entladeintegral-Schwellenwert Q^{E}_{Z2} ist, soll die Entladestromgrenze G^{E} auf den Spitzenlast-Entladestromgrenzwert G^{E}_{S} eingestellt werden.

Hierbei versteht es sich, dass die vorstehend im Zusammenhang mit den Figuren 3 und 4 exemplarisch für ein Entladen beschriebenen Vorgänge auf einen Ladebetrieb übertragbar sind, wobei dann anstelle der Größen G^{E}_{D}, G^{E}_{Z}, G^{E}_{S}, G^{E}, E, Q^{E}_{S1}, Q^{E}_{S2}, Q^{E}_{Z1}, Q^{E}_{Z2}, I^{E}_{S} und I^{E}_{Z} entsprechend G^{L}_{D}, G^{L}_{Z}, G^{L}_{S}, G^{L}, L, Q^{L}_{S1}, Q^{L}_{S2}, Q^{L}_{Z1}, Q^{L}_{Z2}, I^{L}_{S} und I^{L}_{Z} zu verwenden sind.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 10: Kraftfahrzeug
- 20: Elektrischer Energiespeicher
- 20a, 20b, 20c: Batteriepack
- 30: Vorrichtung zum Betreiben eines elektrischen Energiespeichers
- E: Entladestrom
- I^{E}_{S}: Spitzenlast-Entladeintegral
- I^{E}_{Z}: Zwischen-Entladeintegral
- I^{L}_{S}: Spitzenlast-Ladeintegral
- I^{L}_{Z}: Zwischen-Ladeintegral
- G^{E}: Entladestromgrenze
- G^{E}_{D}: Dauerbetrieb-Entladestromgrenzwert
- G^{E}_{S}: Spitzenlast-Entladestromgrenzwert
- G^{E}_{Z}: Zwischen-Entladestromgrenzwert
- G^{L}: Ladestromgrenze
- G^{L}_{D}: Dauerbetrieb-Ladestromgrenzwert
- G^{L}_{S}: Spitzenlast-Ladestromgrenzwert
- G^{L}_{Z}: Zwischen-Ladestromgrenzwert
- L: Ladestrom
- Q^{E}_{S1}: Erster Spitzenlast-Entladeintegral-Schwellenwert
- Q^{E}_{S2}: Zweiter Spitzenlast-Entladeintegral-Schwellenwert
- Q^{E}_{Z1}: Erster Zwischen-Entladeintegral-Schwellenwert
- Q^{E}_{Z2}: Zweiter Zwischen-Entladeintegral-Schwellenwert
- Q^{L}_{S1}: Erster Spitzenlast-Ladeintegral-Schwellenwert
- Q^{L}_{S2}: Zweiter Spitzenlast-Ladeintegral-Schwellenwert
- Q^{L}_{Z1}: Erster Zwischen-Ladeintegral-Schwellenwert
- Q^{L}_{Z2}: Zweiter Zwischen-Ladeintegral-Schwellenwert

## Patentansprüche

1. Verfahren zum Betreiben eines elektrischen Energiespeichers (20) eines Kraftfahrzeugs (10), vorzugsweise während eines Fahrbetriebs des Kraftfahrzeugs (10), wobei das Verfahren aufweist:
Vorgeben einer Entladestromgrenze (G^{E}), die einen von dem elektrischen Energiespeicher (20) maximal abführbaren Strom angibt; und
Betreiben des elektrischen Energiespeichers (20) unter Berücksichtigung der vorgegebenen Entladestromgrenze (G^{E});
**dadurch gekennzeichnet, dass:**
das Vorgeben ein zeitweises Einstellen der Entladestromgrenze (G^{E}) auf Entladestromgrenzwerte, die größer als ein, vorzugsweise unter Dauerentladebelastungen des elektrischen Energiespeichers (20) angenommener, Dauerbetrieb-Entladestromgrenzwert (G^{E}_{D}) sind, aufweist, wobei das Einstellen in mindestens zwei Stufen erfolgt.

2. Verfahren nach Anspruch 1, wobei die mindestens zwei Stufen aufweisen:
eine Spitzenlast-Entladestufe, in der die Entladestromgrenze (G^{E}) auf einen Spitzenlast-Entladestromgrenzwert (G^{E}_{S}) eingestellt ist; und
eine Zwischen-Entladestufe, in der die Entladestromgrenze (G^{E}) auf einen Zwischen-Entladestromgrenzwert (G^{E}_{Z}) eingestellt ist, der kleiner als der Spitzenlast-Entladestromgrenzwert (G^{E}_{S}) und größer als der Dauerbetrieb-Entladestromgrenzwert (G^{E}_{D}) ist.

3. Verfahren nach Anspruch 2, wobei:
zunächst die Spitzenlast-Entladestufe und anschließend die Zwischen-Entladestufe eingestellt wird; und/oder
die Entladestromgrenze (G^{E}) von der Spitzenlast-Entladestufe auf die Zwischen-Entladestufe reduziert wird, wenn ein Verlauf eines Entladestroms (E) des elektrischen Energiespeichers (20) eine vorbestimmte Spitzenlast-Überwachungsbedingung erfüllt; und/oder
die Entladestromgrenze (G^{E}) von der Spitzenlast-Entladestufe zur Zwischen-Entladestufe in einem exponentiell abfallenden Verlauf überführt wird; und/oder
nach der Zwischen-Entladestufe der Dauerbetrieb-Entladestromgrenzwert eingestellt wird; und/oder
die Entladestromgrenze (G^{E}) von der Zwischen-Entladestufe auf den Dauerbetrieb-Entladestromgrenzwert reduziert wird, wenn ein Verlauf eines Entladestroms (E) des elektrischen Energiespeichers (20) eine vorbestimmte Zwischen-Überwachungsbedingung erfüllt; und/oder
die Entladestromgrenze (G^{E}) von der Zwischen-Entladestufe zum Dauerbetrieb-Entladestromgrenzwert in einem exponentiell abfallenden Verlauf überführt wird.

4. Verfahren nach Anspruch 2 oder 3, wobei:
a) die Spitzenlast-Entladestufe für einen begrenzten Spitzenlast-Zeitraum eingestellt wird, wobei vorzugsweise:
der Spitzenlast-Zeitraum maximal 40, vorzugsweise maximal 30 Sekunden, besonders bevorzugt maximal 20 Sekunden beträgt, wenn während die Spitzenlast-Entladestufe eingestellt ist, ein Entladestrom (E) des elektrischen Energiespeichers (20) durchgängig den Spitzenlast-Entladestromgrenzwert (G^{E}_{S}) annimmt; und/oder
der Spitzenlast-Zeitraum dadurch begrenzt ist, dass ein Spitzenlast-Entladeintegral (I^{E}_{S}), das einen Entladestrom (E) des elektrischen Energiespeichers (20) über eine Zeit integriert, einen vorbestimmten Spitzenlast-Entladeintegral-Schwellenwert (Q^{E}_{S1}) annimmt; und/oder
b) die Zwischen-Entladestufe für einen begrenzten Zwischen-Zeitraum eingestellt wird, wobei vorzugsweise:
der Zwischen-Zeitraum maximal 400, vorzugsweise maximal 300 Sekunden, besonders bevorzugt maximal 200 Sekunden beträgt, wenn während die Zwischen-Entladestufe eingestellt ist, ein Entladestrom (E) des elektrischen Energiespeichers (20) durchgängig den Zwischen-Entladestromgrenzwert (G^{E}_{Z}) annimmt; und/oder
der Zwischen-Zeitraum dadurch begrenzt ist, dass ein Zwischen-Entladeintegral (I^{E}_{Z}), das einen Entladestrom (E) des elektrischen Energiespeichers (20) über eine Zeit integriert, einen vorbestimmten Zwischen-Entladeintegral-Schwellenwert (Q^{E}_{Z1})annimmt.

5. Verfahren nach einem der Ansprüche 2 bis 4, wobei:
der Dauerbetrieb-Entladestromgrenzwert (G^{E}_{D}), der Zwischen-Entladestromgrenzwert (G^{E}_{Z}) und/oder der Spitzenlast-Entladestromgrenzwert (G^{E}_{S}) fortwährend in Abhängigkeit von einer Temperatur des elektrischen Energiespeichers (20), einem Alterungszustand des elektrischen Energiespeichers (20) und/oder einem Ladezustand des elektrischen Energiespeichers (20) angepasst werden/wird.

6. Verfahren nach einem der Ansprüche 2 bis 5, wobei:
nachdem die Entladestromgrenze (G^{E}) von der Spitzenlast-Entladestufe (G^{E}_{S}) auf die Zwischen-Entladestufe oder den Dauerbetrieb-Entladestromgrenzwert (G^{E}_{D}) reduziert wurde, zunächst eine vorbestimmte Abklingbedingung erfüllt sein muss, bevor die Entladestromgrenze (G^{E}) erneut auf die Spitzenlast-Entladestufe (G^{E}_{S}) eingestellt werden kann;
der Dauerbetrieb-Entladestromgrenzwert (G^{E}_{D}) mindestens 50 Ampere, vorzugsweise mindestens 100 Ampere, besonders bevorzugt mindestens 150 Ampere, beträgt; und/oder
der Zwischen-Entladestromgrenzwert (G^{E}_{Z}) mindestens 75 Ampere, vorzugsweise mindestens 150 Ampere, besonders bevorzugt mindestens 200 Ampere, beträgt; und/oder
der Spitzenlast-Entladestromgrenzwert (G^{E}_{S}) mindestens 100 Ampere, vorzugsweise mindestens 200 Ampere, besonders bevorzugt mindestens 300 Ampere, beträgt.

7. Verfahren zum Betreiben eines elektrischen Energiespeichers (20) eines Kraftfahrzeugs (10), vorzugsweise während eines Rekuperationsbetriebs des Kraftfahrzeugs (10), wobei das Verfahren aufweist:
Vorgeben einer Ladestromgrenze (G^{L}), die einen dem elektrischen Energiespeicher (20) maximal zuführbaren Strom angibt; und
Betreiben des elektrischen Energiespeichers (20) unter Berücksichtigung der vorgegebenen Ladestromgrenze (G^{L});
**dadurch gekennzeichnet, dass:**
das Vorgeben ein zeitweises Einstellen der Ladestromgrenze (G^{L}) auf Ladestromgrenzwerte, die größer als ein, vorzugsweise während eines Dauerladens des elektrischen Energiespeichers (20) angenommener, Dauerbetrieb-Ladestromgrenzwert (G^{L}_{D}), sind, aufweist, wobei das Einstellen in mindestens zwei Stufen erfolgt.

8. Verfahren nach Anspruch 7, wobei die mindestens zwei Stufen aufweisen:
eine Spitzenlast-Ladestufe, in der die Ladestromgrenze (G^{L}) auf einen Spitzenlast-Ladestromgrenzwert (G^{L}_{S}) eingestellt ist; und
eine Zwischen-Ladestufe, in der die Ladestromgrenze (G^{L}) auf einen Zwischen-Ladestromgrenzwert (G^{L}_{Z}) eingestellt ist, der kleiner als der Spitzenlast-Ladestromgrenzwert (G^{L}_{S}) und größer als der Dauerbetrieb-Ladestromgrenzwert (G^{L}_{D}) ist.

9. Verfahren nach Anspruch 8, wobei:
zunächst die Spitzenlast-Ladestufe und anschließend die Zwischen-Ladestufe eingestellt wird; und/oder
die Ladestromgrenze (G^{L}) von der Spitzenlast-Ladestufe auf die Zwischen-Ladestufe reduziert wird, wenn ein Verlauf eines Ladestroms (L) des elektrischen Energiespeichers (20) eine vorbestimmte Spitzenlast-Überwachungsbedingung erfüllt; und/oder
die Ladestromgrenze (G^{L}) von der Spitzenlast-Ladestufe zur Zwischen-Ladestufe in einem exponentiell abfallenden Verlauf überführt wird; und/oder
nach der Zwischen-Ladestufe der Dauerbetrieb-Ladestromgrenzwert eingestellt wird; und/oder
die Ladestromgrenze (G^{L}) von der Zwischen-Ladestufe auf den Dauerbetrieb-Ladestromgrenzwert (G^{L}_{D}) reduziert wird, wenn ein Verlauf eines Ladestroms (L) des elektrischen Energiespeichers (20) eine vorbestimmte Zwischen-Überwachungsbedingung erfüllt; und/oder
die Ladestromgrenze (G^{L}) von der Zwischen-Ladestufe zum Dauerbetrieb- Ladestromgrenzwert in einem exponentiell abfallenden Verlauf überführt wird.

10. Verfahren nach Anspruch 8 oder 9, wobei:
c) die Spitzenlast-Ladestufe für einen begrenzten Spitzenlast-Zeitraum eingestellt wird, wobei vorzugsweise:
der Spitzenlast-Zeitraum maximal 40, vorzugsweise maximal 30 Sekunden, besonders bevorzugt maximal 20 Sekunden beträgt, wenn während die Spitzenlast-Ladestufe eingestellt ist, ein Ladestrom (L) des elektrischen Energiespeichers (20) durchgängig den Spitzenlast-Ladestromgrenzwert (G^{L}_{S}) annimmt; und/oder
der Spitzenlast-Zeitraum dadurch begrenzt ist, dass ein Spitzenlast-Ladeintegral (I^{E}_{S}), das einen Ladestrom (L) des elektrischen Energiespeichers (20) über eine Zeit integriert, einen vorbestimmten Spitzenlast-Ladeintegral-Schwellenwert (Q^{L}_{S1}) annimmt; und/oder
d) die Zwischen-Ladestufe für einen begrenzten Zwischen-Zeitraum eingestellt wird, wobei vorzugsweise:
der Zwischen-Zeitraum maximal 400, vorzugsweise maximal 300 Sekunden, besonders bevorzugt maximal 200 Sekunden beträgt, wenn während die Zwischen-Ladestufe eingestellt ist, ein Ladestrom (L) des elektrischen Energiespeichers (20) durchgängig den Zwischen-Ladestromgrenzwert (G^{L}_{Z}) annimmt; und/oder
der Zwischen-Zeitraum dadurch begrenzt ist, dass ein Zwischen-Ladeintegral (I^{L}_{Z}), das einen Ladestrom (L) des elektrischen Energiespeichers (20) über eine Zeit integriert, einen vorbestimmten Zwischen-Ladeintegral-Schwellenwert (Q^{L}_{Z1}) annimmt.

11. Verfahren nach einem der Ansprüche 2 bis 4, wobei:
der Dauerbetrieb-Ladestromgrenzwert (G^{L}_{D}), der Zwischen-Ladestromgrenzwert (G^{L}_{Z}) und/oder der Spitzenlast-Ladestromgrenzwert (G^{L}_{S}) fortwährend in Abhängigkeit von einer Temperatur des elektrischen Energiespeichers (20), einem Alterungszustand des elektrischen Energiespeichers (20) und/oder einem Ladezustand des elektrischen Energiespeichers (20) angepasst werden/wird.

12. Verfahren nach einem der Ansprüche 2 bis 5, wobei:
nachdem die Ladestromgrenze (G^{L}) von der Spitzenlast-Ladestufe auf die Zwischen-Ladestufe oder den Dauerbetrieb-Ladestromgrenzwert (G^{L}_{D}) reduziert wurde, zunächst eine vorbestimmte Abklingbedingung erfüllt sein muss, bevor die Ladestromgrenze (G^{L}) erneut auf die Spitzenlast-Ladestufe eingestellt werden kann;
der Dauerbetrieb-Ladestromgrenzwert (G^{L}_{D}) mindestens 50 Ampere, vorzugsweise mindestens 100 Ampere, besonders bevorzugt mindestens 150 Ampere beträgt; und/oder
der Zwischen-Ladestromgrenzwert (G^{L}_{Z}) mindestens 75 Ampere, vorzugsweise mindestens 150 Ampere, besonders bevorzugt mindestens 200 Ampere beträgt; und/oder
der einen Spitzenlast-Ladestromgrenzwert (G^{L}_{S}) mindestens 100 Ampere, vorzugsweise mindestens 200 Ampere, besonders bevorzugt mindestens 300 Ampere beträgt.

13. Verfahren zum Betreiben eines elektrischen Energiespeichers (20) eines Kraftfahrzeugs (10), wobei das Verfahren ein Beitreiben des elektrischen Energiespeichers (20) gemäß einem Verfahren nach einem der Ansprüche 1 bis 6 und ein Betreiben des elektrischen Energiespeichers (20) gemäß einem Verfahren nach einem der Ansprüche 7 bis 12 aufweist, wobei vorzugsweise:
der Zwischen-Entladestromgrenzwert (G^{E}_{Z}) und der Zwischen-Ladestromgrenzwert (G^{L}_{Z}) voneinander unterschiedlich sind; und/oder
der Spitzen-Entladestromgrenzwert (G^{E}_{S}) und der Spitzen-Ladestromgrenzwert (G^{L}_{S}) voneinander unterschiedlich sind.

14. Vorrichtung zum Betreiben eines elektrischen Energiespeichers (20) für ein Kraftfahrzeug (10), wobei die Vorrichtung (30) für ein Durchführen eines Verfahrens nach einem der vorherigen Ansprüche eingerichtet ist.

15. Kraftfahrzeug (10), vorzugsweise Nutzfahrzeug, aufweisend:
einen elektrischen Energiespeicher (20), vorzugsweise aufweisend mehrere Batteriezellen; und
eine Vorrichtung (30) nach Anspruch 14.
